# EUROPÄISCHE PATENTSCHRIFT

(11) **EP 1 521 504 B1**
(45) Veröffentlichungstag und Bekanntmachung des Hinweises auf die Patenterteilung: **21.09.2011**
(21) Anmeldenummer: 04023411.4
(22) Anmeldetag: 01.10.2004
(51) Int. Cl.: H05B 33/14, H05B 33/12

(54) **Elektrolumineszenz-Leuchtanordnung**
Electroluminescent lighting device
Dispositif d'éclairage électroluminescent

(30) Priorität: 02.10.2003 DE 20315251 U
(43) Veröffentlichungstag der Anmeldung: 06.04.2005
(73) Patentinhaber: REUM GmbH, 74736 Hardheim (DE)
(72) Erfinder: Helmut Moser, D-76646 Bruchsal (DE)
(74) Vertreter: Maser, Jochen

(56) Entgegenhaltungen:
- DE-U1- 20 117 575
- DE-U1- 20 119 972
- DE-U1- 20 215 764

## Beschreibung

Die Erfindung betrifft eine Elektrolumineszenz-Leuchtanordnung der im Oberbegriff von Anspruch 1 genannten Art.

Solche Leuchtanordnungen finden in zunehmendem Maß überall dort Verwendung, wo flächige Leuchten mit gleichmäßiger Helligkeit und äußerst geringer Einbautiefe benötigt werden. Dies gilt, ohne hierauf beschränkt zu sein, auch für die Fahrgasträume von Fahrzeugen, insbesondere Kraftfahrzeugen, bei denen Teile der Innenraumverkleidung, beispielsweise des Dachhimmels oder von Seitenstützen als Raumleuchten ausgebildet oder Vertiefungen, wie z.B. Handschuhfächer, in die von außen her nur wenig Licht einfällt, mit einer zusätzlichen Leuchte versehen werden.

Dabei ist es wünschenswert, nicht nur eine einfache, homogen leuchtende Fläche oder Vertiefungsauskleidung einzusetzen, sondern darüber honaus auch dekorativ-gestalterische Möglichkeiten zu eröffnen.

In diesem Zusammenhang sei auf das deutsche Gebrauchsmuster 202 15 764.4 verwiesen, bei dem eine Elektrolumineszenz-Leuchtanordnung der im Oberbegriff von Anspruch 1 genannten Art mit einem rasterförmig ausgebildeten Lochmuster kombiniert wird, um eine teilweise Transparenz für Fremdlicht zu erzeugen.

Demgegenüber liegt der Erfindung die Aufgabe zugrunde, eine Elektrolumineszenz-Leuchtanordnung der eingangs genannten Art so auszubilden, daß sich weitere gestalterische Möglichkeiten eröffnen.

Zur Lösung dieser Aufgabe sieht die Erfindung die im Anspruch 1 niedergelegten Merkmale vor.

Dadurch, daß eine Beflockungsschicht, die aus einer Klebstoffschicht und in dieser mit einem ihrer Enden verankerten, ansonsten aber frei vorstehenden kurzen Fasern besteht und für das von der Pigmentschicht des Flachkondensators abgegebene Licht zumindest teilweise transparent ist, über der leuchtenden Oberfläche des Flachkondensators, d.h. entweder direkt auf seiner transparenten, elektrisch leitenden Deckelektrode oder auf eine diese Deckelektrode überdeckenden Schutzschicht, aufgebracht ist, erhält die erfindungsgemäße Elektrolumineszenz-Leuchtanordnung ein velour- bzw. samtartiges Aussehen und fühlt sich bei Berührung mit der menschlichen Haut textilartig an.

Insbesondere dann, wenn die Innenauskleidungselemente des Fahrgastraumes eines Fahrzeuges mit textilen Materialien überzogen sind, gliedert sich eine erfindungsgemäße Elektrolumineszenz-Leuchtanordnung äußerst harmonisch in ein solches Ensemble ein, weil im ausgeschalteten Zustand ihr Leuchtencharakter völlig in den Hintergrund tritt und sie dem Betrachter die gleiche textilartige Oberfläche darbietet, wie die sie umgebenden, nicht leuchtenden Bereiche.

Vor allem auch als Auskleidung von zum Aufbewahren von Gegenständen dienenden Vertiefungen, die eine zusätzliche Beleuchtung benötigen, wie z.B. von Handschuhfächern oder Aufnahmeschalen in der Mittelkonsole oder den Türen von Fahrzeugen, ist eine erfindungsgemäße Elektrolumineszenz-Leuchtanordnung besonders geeignet, weil sie einerseits ein sehr gleichmäßiges Licht liefert und andererseits dann, wenn ein Benutzer beim Hineingreifen in einen solchen Aufnahmebehälter mit seiner Hand mit der Leuchte in Berührung kommt, einen angenehmen Hautkontakt vermittelt.

Da eine erfindungsgemäße Elektrolumineszenz-Leuchtanordnung eine äußerst geringe Einbautiefe besitzt und aus flexiblen bzw. tiefziehbaren Materialien hergestellt werden kann, ist ihre Anpassung an nahezu beliebige Raumformen möglich.

Sowohl die Klebstoffschicht als auch die mit einem ihrer Enden in sie eingebetteten, kurzen Fasern können aus verschiedensten Materialien hergestellt werden, die entweder als solche für das von dem jeweiligen Flachkondensator abgegebene Licht völlig durchlässig sind oder zumindest einen hohen Transparenzgrad aufweisen.

Es sei ausdrücklich darauf hingewiesen, daß sich eine erfindungsgemäße Elektrolumineszenz-Leuchtanordnung nicht nur für Anwendungsfälle im Fahrzeug-, sondern auch im Wohnbereich, in der Werbung und vielen anderen Bereichen eignet, bei denen ihre spezifischen Eigenschaften erwünscht sind.

Vorteilhafte Weiterbildungen und Ausgestaltungen einer erfindungsgemäßen Elektrolumineszenz-Leuchtanordnung sind in den Unteransprüchen niedergelegt.

Die elektrisch leitende Deckelektrode des Flachkondensators oder eine sie überziehenden Schutzschicht wird in der Weise beflockt, daß zunächst ein spezieller Faserklebstoff aufgebracht wird, in den die Flockfasern noch in nassem Zustand elektrisch eingeschossen werden. Dabei kann prinzipiell jede textile Faser verwendet werden. Die gebräuchlichsten Fasern bestehen aus Polyamid, Viskose oder Polyester. Die Dichte und Länge der Fasern können von Anwendungsfall zu Anwendungsfall variiert werden, wodurch der Griff der Oberfläche von samtweich bis bürstenartig variiert werden kann.

Das Einschießen der Fasern in den Klebstoff kann mit Hilfe eines elektrostatischen Beflockungsgerätes erfolgen. Dieses lädt die kurzen Fasern auf eine Spannung von 50 bis 90 kV auf. Dadurch springen sie vom Beflockungsgerät längs der elektrostatischen Feldlinien zu jeder geerdeten Fläche.

Besonders vorteilhaft ist in diesem Zusammenhang die Tatsache, daß die Deckelektrode des Flachkondensators elektrisch leitend ist und somit auf einfache Weise geerdet werden kann, was eine wichtige Voraussetzung für eine gute und gleichmäßige Beflockung ist.

Zur Beflockung kann das Beflockungsgerät unter leichtem Schütteln über die zu beflockende Fläche bewegt werden. Hierdurch werden zunächst mit einem Abstand von ca. 10 cm die ersten Fasern eingeschossen, die die Klebstoffschicht stabilisieren. Nach einigen Sekunden wird dann der Abstand zu der zu beflockenden Oberfläche immer mehr verringert, um sie so dicht wie möglich zu füllen.

Als Klebstoffe werden spezielle elektrisch leitfähige Klebstoffe eingesetzt. Sie müssen nicht nur zum Substrat, sondern auch zu den Fasern eine gute Haftung haben. Je nach Anwendungsfall müssen sie auch weitere Anforderungen erfüllen, beispielsweise Waschfestigkeit, Ölbeständigkeit usw..

Nach dem Aufbringen der Flockfasern wird die beflockte Oberfläche durch Absaugen, Abblasen, Klopfen, Bürsten, Waschen oder dgl. von losen Fasern gereinigt.

Die Erfindung wird im folgenden anhand eines Ausführungsbeispiels unter Bezugnahme auf die Zeichnung beschrieben; in dieser zeigen:
- Figur 1: eine stark schematisierte Draufsicht auf die Unterseite eines verschiebbaren Beschattungsdachs für ein Kraftfahrzeug, die eine erfindungsgemäße Elektrolumineszenz-Leuchtanordnung trägt, und
- Figur 2: einen Schnitt durch das Beschattungsdach aus Figur 1 längs der Linie II-II.

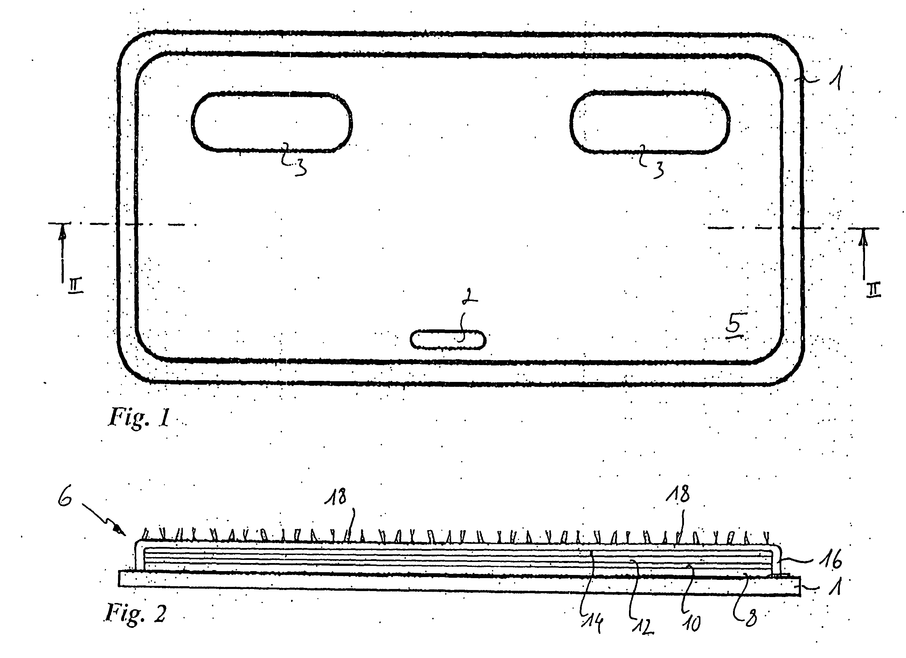

Das in den Figuren dargestellte, verschiebbare Beschattungsdach 1 ist dafür vorgesehen, im inneren eines Kraftfahrzeugs unterdessen Glasdach so angeordnet zu werden, daß es je nach Bedarf vor dieses Glasdach gezogen oder zurück geschoben werden kann. Auf seiner in Figur 1 dargestellte Unterseite weist dieses Beschattungsdach 1 eine Griffmulde 2 und zwei Belüftungsöffnungen 3 auf. Mit Ausnahme dieser Elemente ist nahezu seine gesamte Unterseite mit einer erfindungsgemäßen Elektrolumineszenz-Leuchtanordnung 5 bedeckt.

Wie Figur 2 zeigt, besteht diese Elektrolumineszenz-Leuchtanordnung 5 aus einem einzigen Flachkondensator 6, der in herkömmlicher Weise eine elektrisch leitende Basiselektrode 8, eine die Basiselektrode vollständig überdeckende Isolationsschicht 10, eine darüber angeordnete Pigmentschicht 12 und eine für das im Betrieb des Flachkondensators 6 von der Pigmentschicht 12 abgegebene Licht transparente, äußerst dünne Deckelektrode 14 umfaßt.

Es sei hier ausdrücklich darauf hingewiesen, daß in Figur 2 die Dicken der einzelnen Schichten der Deutlichkeit halber stark vergrößert und auch in Relation zueinander nicht maßstabsgetreu wiedergegeben sind.

Um das oben erwähnte Leuchten der Pigmentschicht 12 zu erzeugen, wird an die beiden Elektroden 8 und 14 in bekannter Weise über nicht dargestellte Leitungsanschlüsse eine Wechselspannung mit geeigneter Frequenz und Amplitude angelegt.

Gemäß der Erfindung wird die das Licht abgebende Oberseite des Flachkondensators 6 von einer getrockneten oder ausgehärteten Klebstoffschicht 16 überdeckt, in die bei der Herstellung einer Vielzahl von kurzen Fasern 18 so eingebettet wurde, daß sie mit ihrem einen Ende in der getrockneten oder gehärteten Klebstoffschicht 16 fest verankert sind, mit dem Großteil ihrer Länge über deren Oberfläche aber frei und nahezu senkrecht vorstehen. Die in Figur 2 übertrieben groß dargestellten Zwischenräume der Fasern 18 sind so gewählt, daß diese im Betrieb des Flachkondensators 6 das von seiner Pigmentschicht 12 abgegebene Licht hindurch treten lassen. Auch können die Fasern 18 aus einem Material bestehen, das als solches für dieses Licht durchlässig ist. In diesem Fall können dann die einzelnen Fasern 18 sehr dicht nebeneinander angeordnet sein.

Die Klebstoffschicht 16 überdeckt bei dem wiedergegebenen Ausführungsbeispiel nicht nur die Oberfläche des Flachkondensators 6 sondern auch seine Seitenkanten und besteht aus einem im getrockneten oder gehärteten Zustand wasserundurchlässigen Material, so daß sie den Flachkondensator 6 gleichzeitig gegen das Eindringen von Feuchtigkeit schützt. Alternativ hierzu kann auch eine zusätzliche Schutzschicht zwischen der transparenten Deckelektrode 14 und der Klebstoffschicht 16 vorgesehen sein.

Die beschriebene Beflockung verleiht der Unterseite des Beschattungsdaches 1 eine velouroder samtartige Beschaffenheit, die optisch reizvoll ist und bei Berührung ein angenehmes Gefühl vermittelt. Gleichzeitig kann das Beschattungsdach als flächige Lichtquelle für den Innenraum des betreffenden Kraftfahrzeuges dienen.

Sowohl die Klebstoffschicht 16 als auch die Fasern 18 der Beflockung können farblos sein, so daß die Farbe des von der erfindungsgemäßen Elektrolumineszenz-Leuchtanordnung 5 abgegebenen Lichts einzig und allein von den Eigenschaften des Flachkondensators 6 und insbesondere von der Farbe der in der Pigmentschicht 12 vorhandenen Pigmente aber auch von der Frequenz und Amplitude der angelegten Wechselspannung abhängt.

Alternativ hierzu ist es möglich, die Klebstoffschicht 16 und/oder die Fasern 18 mit einer von der Farbe des von der Pigmentschicht 12 abgegebenen Lichts abweichenden Farbe auszustatten, wodurch sich reizvolle Mischfarben-Effekte erzielen lassen. Auch ist es möglich, die Klebstoffschicht 16 und/oder die Fasern 18 in unterschiedlichen Flächenbereichen unterschiedlich einzufärben.

Auch ist es möglich, auf der in Figur 1 gezeigten Fläche des Beschattungsdaches 1 mehrere Flachkondensatoren nebeneinander anzuordnen, die beispielsweise eine gemeinsame Basiselektrode 8 aber elektrisch voneinander getrennte Deckelektroden 14 aufweisen, so daß sie voneinander unabhängig angesteuert und zum Leuchten gebracht werden können.

## Patentansprüche

1. Elektrolumineszenz-Leuchtanordnung (5), insbesondere für die Innenausstattung von Fahrzeugen, mit wenigstens einem Flachkondensator (6), der zumindest folgende Schichten umfaßt: eine flächige Basiselektrode (8), eine auf wenigstens eine Flachseite der Basiselektrode (8) aufgebrachte Pigmentschicht (12) und eine die Pigmentschicht (12) überdeckende, transparente, elektrisch leitende Deckelektrode (14), durch die im Betrieb das von der Pigmentschicht (12) abgegebene Licht austritt, **dadurch gekennzeichnet, daß** zumindest ein Teil der leuchtenden Oberfläche des Flachkondensators (6) von einer für das Licht der Pigmentschicht (12) zumindest teilweise transparenten, kurze Fasern (18) umfassenden Beflockungsschicht (16, 18) überdeckt ist.

2. Elektrolumineszenz-Leuchtanordnung nach Anspruch 1, **dadurch gekennzeichnet, daß** der Flachkondensator (6) zwischen der Basiselektrode (8) und der Pigmentschicht (12) eine seine Durchschlagsfestigkeit erhöhende Isolationsschicht (10) aufweist.

3. Elektrolumineszenz-Leuchtanordnung nach Anspruch 1 oder 2, **dadurch gekennzeichnet, daß** zwischen der transparenten Deckelektrode (14) und der Beflockungsschicht (16, 18) eine für das Licht der Pigmentschicht (12) transparente, den Flachkondensator (6) gegen das Eindringen von Feuchtigkeit schützende Schutzschicht vorgesehen ist.

4. Elektrolumineszenz-Leuchtanordnung nach einem der vorhergehenden Ansprüche, **dadurch gekennzeichnet, daß** die Beflockungsschicht (16, 18) eine für das Licht der Pigmentschicht (12) transparente Klebstoffschicht (16) umfaßt, in die jede der kurzen Fasern (18) mit einem ihrer Enden eingebettet ist.

5. Elektrolumineszenz-Leuchtanordnung nach den Ansprüchen 3 und 4, **dadurch gekennzeichnet, daß** die transparente Klebstoffschicht (16) gleichzeitig als Schutzschicht dient.

6. Elektrolumineszenz-Leuchtanordnung nach Anspruch 4 oder 5, **dadurch gekennzeichnet, daß** die transparente Klebstoffschicht (16) in einer von der Farbe des von der Pigmentschicht (12) abgegebenen Lichts verschiedenen Farbe eingefärbt ist, so daß sich im Betrieb eine Mischfarbe ergibt.

7. Elektrolumineszenz-Leuchtanordnung nach einem der Ansprüche 4 bis 6, **dadurch gekennzeichnet, daß** die transparente Klebstoffschicht (16) von einem EinKomponenten-System gebildet wird.

8. Elektrolumineszenz-Leuchtanordnung nach Anspruch 7, **dadurch gekennzeichnet, daß** die transparente Klebstoffschicht (16) von einem wasserlöslichen Dispersionsklebstoff auf Acrylatbasis gebildet wird.

9. Elektrolumineszenz-Leuchtanordnung nach Anspruch 7, **dadurch gekennzeichnet, daß** die transparente Klebstoffschicht (16) von einem schnell trocknenden wasserlöslichen Dispersionsklebstoff gebildet wird.

10. Elektrolumineszenz-Leuchtanordnung nach einem der Ansprüche 4 bis 6, **dadurch gekennzeichnet, daß** die transparente Klebstoffschicht (16) von einem Zwei-Komponenten-System gebildet wird.

11. Elektrolumineszenz-Leuchtanordnung nach Anspruch 10, **dadurch gekennzeichnet, daß** die transparente Klebstoffschicht (16) von einem lösemittelhaltigen Polyurethanklebstoff gebildet wird, der mit einem, Härter gemischt ist.

12. Elektrolumineszenz-Leuchtanordnung nach einem der vorhergehenden Ansprüche, **dadurch gekennzeichnet, daß** die kurzen Fasern (18) eine von der Farbe des von der Pigmentschicht (12) abgegebenen Lichts verschiedene Farbe besitzen, so daß sich im Betrieb eine Mischfarbe ergibt.

13. Elektrolumineszenz-Leuchtanordnung nach einem der vorhergehenden Ansprüche, **dadurch gekennzeichnet, daß** die Länge der kurzen Fasern (18) im Bereich von 0,1 mm bis 2 mm liegt.

14. Elektrolumineszenz-Leuchtanordnung nach einem der vorhergehenden Ansprüche, **dadurch gekennzeichnet, daß** die kurzen Fasern (18) zumindest teilweise aus Polyamid bestehen.

15. Elektrolumineszenz-Leuchtanordnung nach einem der vorhergehenden Ansprüche, **dadurch gekennzeichnet, daß** die kurzen Fasern (18) zumindest teilweise aus Viskose bestehen.

16. Elektrolumineszenz-Leuchtanordnung nach einem der vorhergehenden Ansprüche, **dadurch gekennzeichnet, daß** die kurzen Fasern (18) zumindest teilweise aus Baumwolle bestehen.

17. Elektrolumineszenz-Leuchtanordnung nach einem der vorhergehenden Ansprüche, **dadurch gekennzeichnet, daß** die kurzen Fasern (18) zumindest teilweise aus Polyester bestehen.

## Claims

1. An electroluminescent lighting device (5), in particular for vehicle interiors, having at least one flat capacitor (6) which comprises at least the following layers: a flat base electrode (8), a pigment layer (12) applied to at least one flat side of the base electrode (8), and a transparent, electrically conductive cover electrode (14) which covers the pigment layer (12) and through which, in use, the light emitted by the pigment layer (12) exits, **characterised in that** at least part of the luminescent surface of the flat capacitor (6) is covered by a flock-coating layer (16, 18) which is at least partially transparent to the light of the pigment layer (12) and comprises short fibres (18).

2. The electroluminescent lighting device as claimed in claim 1, **characterised in that** the flat capacitor (6) has an insulating layer (10) arranged between the base electrode (8) and the pigment layer (12) which enhances its dielectric strength.

3. The electroluminescent lighting device as claimed in claim 1 or 2, **characterised in that** a protective layer transparent to the light of the flat capacitor (6) and protecting the pigment layer (12) against moisture ingress is provided between the transparent cover electrode (14) and the flock-coating layer (16, 18).

4. The electroluminescent lighting device as claimed in any of the preceding claims, **characterised in that** the flock-coating layer (16, 18) comprises an adhesive layer (16) which is transparent to the light of the pigment layer (12) and to which each of the short fibres (18) adheres, with one end thereof being embedded therein.

5. The electroluminescent lighting device as claimed in claims 3 and 4, **characterised in that** the transparent adhesive layer (16) serves at the same time as a protective layer.

6. The electroluminescent lighting device as claimed in claim 4 or 5, **characterised in that** the transparent adhesive layer (16) is coloured in a colour differing from the colour of the light emitted by the pigment layer (12), such that, in use, the result will be a mixed colour.

7. The electroluminescent lighting device as claimed in any one of claims 4 to 6, **characterised in that** the transparent adhesive layer (16) is formed from a single-component system.

8. The electroluminescent lighting device as claimed in claim 7, **characterised in that** the transparent adhesive layer (16) is formed from a water-soluble dispersion adhesive on an acrylate base.

9. The electroluminescent lighting device as claimed in claim 7, **characterised in that** the transparent adhesive layer (16) is formed from a fast-drying, water-soluble dispersion adhesive.

10. The electroluminescent lighting device as claimed in any of claims 4 to 6, **characterised in that** the transparent adhesive layer (16) is formed from a two-component system.

11. The electroluminescent lighting device as claimed in claim 10, **characterised in that** the transparent adhesive layer (16) is formed from a solvent-containing polyurethane adhesive mixed with a hardening agent.

12. The electroluminescent lighting device as claimed in any of the preceding claims, **characterised in that** the short fibres (18) have a colour differing from the colour of the light emitted by the pigment layer (12), such that, in use, the result will be a mixed colour.

13. The electroluminescent lighting device as claimed in any of the preceding claims, **characterised in that** the lengths of the short fibres (18) are in a range of from 0.1 mm to 2 mm.

14. The electroluminescent lighting device as claimed in any of the preceding claims, **characterised in that** the short fibres (18) are made at least partially from polyamide.

15. The electroluminescent lighting device as claimed in any of the preceding claims, **characterised in that** the short fibres (18) are made at least partially from viscose.

16. The electroluminescent lighting device as claimed in any of the preceding claims, **characterised in that** the short fibres (18) are made at least partially from cotton.

17. The electroluminescent lighting device as claimed in any of the preceding claims, **characterised in that** the short fibres (18) are made at least partially from polyester.

## Revendications

1. Dispositif d'éclairage électroluminescent (5), notamment pour la garniture de véhicules, pourvu d'au moins un condensateur plat (6) qui comprend au moins les couches suivantes: une électrode de base (8) plate, une couche de pigments (12) appliquée sur au moins un côté plat de l'électrode de base (8), et une électrode de recouvrement (14) électroconductrice transparente recouvrant la couche de pigments (12) et à travers laquelle, en fonctionnement, sort la lumière émise par la couche de pigments (12), **caractérisé en ce qu'**au moins une partie de la surface luminescente du condensateur plat (6) est recouverte par une couche de flocage (16, 18) au moins partiellement transparente comprenant des fibres courtes (18).

2. Dispositif d'éclairage électroluminescent selon la revendication 1, **caractérisé en ce que** le condensateur plat (6) présente, entre l'électrode de base (8) et la couche de pigments (12) une couche d'isolement (10) qui augmente sa rigidité diélectrique.

3. Dispositif d'éclairage électroluminescent selon la revendication 1 ou 2, **caractérisé en ce qu'**il est prévu, entre l'électrode de recouvrement (14) transparente et la couche de flocage (16, 18), une couche protectrice qui est transparente pour la lumière de la couche de pigments (12) et qui constitue, pour le condensateur plat (6), une protection contre la pénétration de l'humidité.

4. Dispositif d'éclairage électroluminescent selon l'une des revendications précédentes, **caractérisé en ce que** la couche de flocage (16, 18) comprend une couche de colle (16) transparente pour la lumière de la couche de pigments (12) et dans laquelle est noyée l'une des extrémités de chacune des fibres courtes (18).

5. Dispositif d'éclairage électroluminescent selon les revendications 3 et 4, **caractérisé en ce que** la couche de colle (16) transparente sert à la fois de couche protectrice.

6. Dispositif d'éclairage électroluminescent selon la revendication 4 ou 5, **caractérisé en ce que** la couche de colle (16) transparente est colorée en une couleur différente de la couleur de la lumière émise par la couche de pigments (12) de sorte qu'on obtient, en fonctionnement, une couleur mixte.

7. Dispositif d'éclairage électroluminescent selon l'une des revendications 4 à 6, **caractérisé en ce que** la couche de colle (16) transparente est formée par un système monocomposant.

8. Dispositif d'éclairage électroluminescent selon la revendication 7, **caractérisé en ce que** la couche de colle (16) transparente est formée par une colle à dispersion à base d'acrylate soluble dans l'eau.

9. Dispositif d'éclairage électroluminescent selon la revendication 7, **caractérisé en ce que** la couche de colle (16) transparente est formée par une colle à dispersion à séchage rapide soluble dans l'eau.

10. Dispositif d'éclairage électroluminescent selon l'une des revendications 4 à 6, **caractérisé en ce que** la couche de colle (16) transparente est formée par un système à deux composants.

11. Dispositif d'éclairage électroluminescent selon la revendication 10, **caractérisé en ce que** la couche de colle (16) transparente est formée par une colle à base de polyuréthane contenant du solvant et mélangée à un durcisseur.

12. Dispositif d'éclairage électroluminescent selon l'une des revendications précédentes, **caractérisé en ce que** les fibres courtes (18) possèdent une couleur qui diffère de la couleur de la lumière émise par la couche de pigments (12), de sorte qu'on obtient, en fonctionnement, une couleur mixte.

13. Dispositif d'éclairage électroluminescent selon l'une des revendications précédentes, **caractérisé en ce que** la longueur des fibres courtes (18) est comprise entre 0,1 mm et 2 mm.

14. Dispositif d'éclairage électroluminescent selon l'une des revendications précédentes, **caractérisé en ce que** les fibres courtes (18) sont constituées au moins partiellement en polyamide.

15. Dispositif d'éclairage électroluminescent selon l'une des revendications précédentes, **caractérisé en ce que** les fibres courtes (18) sont constituées au moins partiellement en viscose.

16. Dispositif d'éclairage électroluminescent selon l'une des revendications précédentes, **caractérisé en ce que** les fibres courtes (18) sont constituées au moins partiellement en coton.

17. Dispositif d'éclairage électroluminescent selon l'une des revendications précédentes, **caractérisé en ce que** les fibres courtes (18) sont constituées au moins partiellement en polyester.
